# FASCICULE DE BREVET EUROPEEN

(11) **EP 0 904 211 B1**
(45) Date de publication et mention de la délivrance du brevet: **24.10.2001**
(21) Numéro de dépôt: 97925986.8
(22) Date de dépôt: 06.06.1997
(51) Int. Cl.: B60G 21/05, B60G 11/60, B60G 3/14

(54) **ESSIEU SOUPLE COMPORTANT UNE TRAVERSE ET DES BRAS TIRES**
TORSIONSWEICHE ACHSE MIT EINEM QUERTRÄGER UND LÄNGSLENKERN
FLEXIBLE AXLE COMPRISING A CROSSPIECE AND TRAILING ARMS

(30) Priorité: 14.06.1996 FR 9607517
(43) Date de publication de la demande: 31.03.1999
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: BLONDELET, Michel, F-63450 Le Crest (FR); FOULQUIER, Jacques, F-63118 Cébazat (FR)
(74) Mandataire: Bauvir, Jacques
(86) Numéro de dépôt international: EP9702945
(87) Numéro de publication internationale: WO9747486

(56) Documents cités:
- EP-A- 0 114 790
- DE-A- 1 580 358
- DE-A- 1 809 698
- DE-A- 3 818 412
- FR-A- 1 591 438
- FR-A- 2 393 690
- FR-A- 2 523 522
- FR-A- 2 608 517
- FR-A- 2 618 733
- FR-A- 2 645 802
- GB-A- 2 041 845
- US-A- 3 778 082

## Description

L'invention concerne les suspensions de véhicules automobiles. Plus particulièrement, l'invention est relative à un essieu reliant deux roues tout en comportant une fonction antiroulis. Plus spécifiquement encore, l'invention se rapporte à la catégorie d'essieux qui comportent deux bras de suspension dont une extrémité supporte une fusée recevant une roue, dont l'autre extrémité est montée articulée sur la caisse du véhicule, et qui comportent en outre une traverse reliant les deux bras de suspension.

On connaît plusieurs variantes de ces essieux, selon la position exacte de la traverse par rapport aux bras. Cette traverse est tantôt montée dans l'axe d'articulation des bras sur la caisse, tantôt montée à une position intermédiaire entre l'axe des fusées et l'axe des articulations des bras sur la caisse (voir par exemple la demande de brevet EP 0 114 790), tantôt montée dans l'axe des fusées, voire même montée légèrement au delà des fusées, et ceci en coupant ou non une droite sécante à l'axe de la fusée et sécante à l'axe d'articulation, et ceci en raison de contraintes liées à l'espace disponible ou en raison d'autres critères. On rencontre couramment ce type d'essieu à l'arrière des voitures de tourisme.

On ne traite pas ici des suspensions à roues indépendantes, qui dans leurs variantes à bras tirés, présentent parfois une sorte de traverse parfaitement rigide, c'est à dire indéformable sous l'effet des sollicitations de service. Une telle traverse est disposée dans l'axe d'articulation des bras par rapport à la caisse, et les bras sont montés rotatifs par rapport à la traverse. La demande de brevet FR 2 393 690 montre un essieu à roues indépendantes de ce type. La traverse d'un tel essieu n'intervient pas dans les caractéristiques d'antiroulis de la suspension, l'essieu en question ne pouvant être qualifié de souple.

L'invention concerne les essieux souples, c'est à dire déformables élastiquement, et dont la déformation ou plus généralement la sollicitation de la traverse participe aux caractéristiques de raideur d'antiroulis du train de roues concerné. Dans ce cas, la traverse, prise globalement, subit une rotation relative de ses extrémités axiales, autour d'un axe transversal. Le brevet FR 1 591 438 illustre un tel essieu.

Une telle traverse est dimensionnée pour être très rigide en flexion. Elle participe au maintien rigoureux de la roue lorsque le bras de suspension est lui-même sollicité en flexion dans un plan qui contient le bras de roue et la traverse. De telles sollicitations sont dues à l'adhérence transversale du pneumatique sur la chaussée et peuvent devenir très importantes en virages négociés à vive allure. Autrement dit, la traverse contribue à empêcher le braquage de la roue, ou du moins contribue à contrôler rigoureusement le braquage de la roue, pour qu'il reste dans des limites acceptables, ou pour qu'il soit contrôlé et non subi. Dans ce cas, la traverse présente souvent une raideur propre en torsion très élevée.

C'est pourquoi il a déjà été proposé de rendre une telle traverse moins raide en torsion, tout en maintenant sa raideur en flexion à un niveau élevé. On consultera à ce sujet le brevet US 4 787 680. Malheureusement, une telle conception n'offre une souplesse de torsion suffisante que lorsque l'on dispose d'une longueur suffisante pour implanter la zone spécifique de la traverse dont la section est adaptée pour diminuer la raideur de torsion. En pratique, cela semble difficilement réalisable en dehors des très gros véhicules. En effet, l'implantation des bras de suspension, de leurs articulations sur la caisse, impose un encombrement transversal pratiquement indépendant de la taille du véhicule. Dès lors, l'espace disponible pour ladite zone spécifique diminue avec la voie du véhicule bien plus vite que proportionnellement. Dans d'autres réalisations d'usage très courant, la traverse est formée par un profil ouvert, dont la raideur de torsion est donc bien plus faible. On constate cependant que la liaison d'une telle traverse aux bras pose de nombreux problèmes d'endurance. La zone de liaison est le siège d'une forte concentration de contrainte, ce qui conduit à la renforcer, par exemple en soudant des plaques de liaison additionnelles.

C'est pourquoi bien souvent le guidage des roues (aspect géométrique) et le contrôle des mouvements de caisse (aspect flexibilité, débattement des roues en fonction des transferts de charges) sont traités séparément. Très couramment, une barre antiroulis séparée des organes de guidage de la ou des roues confère à l'essieu une résistance au roulis s'ajoutant à celle venant des ressorts de suspension par lesquels on transmet aux roues la charge du véhicule.

On observe dans l'état actuel de la technique que le choix entre roues indépendantes et essieu souple présente quelques difficultés mal résolues, que les compromis de caractéristiques que cela impose sont difficiles à maîtriser.

Si l'on décide d'adopter un train de roues du type à essieu souple plutôt qu'à roues indépendantes, la conception d'un tel essieu doit satisfaire des impératifs assez contradictoires. Il faut procurer à l'essieu une raideur suffisante en flexion, gage d'un bon maintien des plans de roues dont on évite des braquages trop importants ou survenant dans un sens indésirable lors de sollicitations transversales importantes. Mais il faut en même temps que les bras de roue puissent débattre relativement indépendamment l'un de l'autre, tout en ayant de préférence un rappel élastique vers la position où les bras sont parallèles entre eux. C'est la fonction antiroulis propre à l'essieu dont on a parlé ci-dessus.

L'objectif de la présente invention est de mieux concilier ces impératifs contradictoires, c'est à dire de conférer à l'essieu une importante raideur à la flexion, tout en lui conférant une fonction antiroulis propre, dont on puisse ajuster le niveau aussi librement que possible, notamment de façon à permettre plus facilement l'utilisation d'un tel essieu sur une gamme très large de véhicules. En particulier, l'invention a pour objectif de rendre superflue l'utilisation d'une barre antiroulis, tout en conférant une fonction antiroulis indépendante de celle que procure les éléments de suspension de chacune des roues d'un train.

Un objectif est de permettre d'intégrer facilement la fonction de contrôle du roulis du véhicule. L'invention vise à permettre notamment l'adoption d'une traverse conférant à l'essieu une fonction antiroulis propre, comme celle de l'essieu proposé dans le brevet US 4 787 680 précité.

Un autre objectif de l'invention est de proposer un essieu dont la réalisation soit aussi simple que possible afin d'en diminuer le coût de revient industriel.

Un autre objectif de l'invention est de procurer des corrections de braquage et/ou de carrossage aidant à la tenue de route du véhicule lorsqu'il prend du roulis dans les virages.

Enfin, dans une variante d'exécution, un autre objectif est de permettre d'intégrer la fonction suspension du véhicule, notamment de façon à permettre un montage de l'essieu sur le véhicule aussi simple que possible.

L'invention propose un essieu souple, pour véhicule comportant au moins deux essieux et une caisse suspendue, ledit essieu comportant deux bras tirés et une traverse à laquelle lesdits bras sont reliés, lesdits bras étant destinés à être accrochés à la caisse de façon à définir un axe d'articulation de chaque bras par rapport à la caisse, lesdits bras portant chacun une fusée destinée à recevoir une roue, ladite traverse reliant lesdits bras de telle façon qu'ils définissent un axe de torsion relative autour duquel les bras oscillent l'un par rapport à l'autre, l'axe de torsion étant décalé par rapport à l'axe d'articulation de chaque bras par rapport à la caisse, caractérisé en ce que la traverse et les bras sont reliés les uns aux autres par des moyens de liaison comprenant deux pièces d'accouplement en matériau élastomérique reliant des éléments accouplés, solidaires sans glissement de ceux-ci et disposées de façon sensiblement symétrique transversalement, chaque pièce d'accouplement ayant une raideur transversale prédéterminée, chaque pièce d'accouplement ayant une raideur de torsion autour de l'axe de torsion prédéterminée, lesdites pièces d'accouplement étant agencées de telle façon que :
- elles autorisent un déplacement transversal relatif entre éléments accouplés,
- la totalité du couple de réaction équilibrant le déplacement relatif entre bras causé par la torsion de l'essieu soit transmis par les pièces d'accouplement,
- les pièces d'accouplement sont axialement éloignées l'une de l'autre.

Notons que l'on entend ici par « axiale ou axialement ou transversalement » une direction parallèle à la largeur du véhicule, c'est à dire parallèle à la grande dimension de la traverse. Dans le présent mémoire, on appelle « axe de roulis » un axe propre à l'essieu, autour duquel les bras de suspension présente le débattement relatif spécifique d'une sollicitation lors de la prise de roulis du véhicule, ou plus généralement spécifique d'une sollicitation non identique des bras de suspension par exemple lorsqu'une seule roue franchit un obstacle en ligne droite, et non pas un axe de référence pour la caisse du véhicule.

Dans l'exemple illustrant la présente invention, le degré de liberté de torsion est procuré par la déformation élastique de pièces d'accouplement en caoutchouc, la raideur de torsion provenant de la raideur desdites pièces d'accouplement en caoutchouc, les autres pièces constitutives de la traverse pouvant être assimilées à des pièces indéformables.

Un avantage de l'invention tient au fait qu'elle autorise de grands angles de débattement d'un bras par rapport à l'autre. Dès lors, à course donnée du mouvement de suspension des roues par rapport à la caisse d'un véhicule, les bras de suspension peuvent être très courts, bien plus courts que ce que l'on rencontre couramment dans le cas d'essieux souple. On peut adopter en général la même longueur de bras que ce que l'on rencontre dans les suspensions à roues indépendantes et bras tirés.

Dans une variante préférée, compatible bien entendu avec les deux voies de réalisation expliquées ci-dessus, des ressorts en matériau élastomérique pour la suspension du véhicule sont intégrés à l'essieu.

L'invention sera mieux comprise par la description qui va suivre, de deux variantes d'un essieu arrière pour voitures de tourisme. Ces exemples sont donnés à titre non limitatif et sont illustrés par le dessin annexé sur lequel :
la figure 1 est une vue en plan de l'essieu,
la figure 2 est une vue de côté,
la figure 3 est une coupe selon III-III repéré à la figure 1.

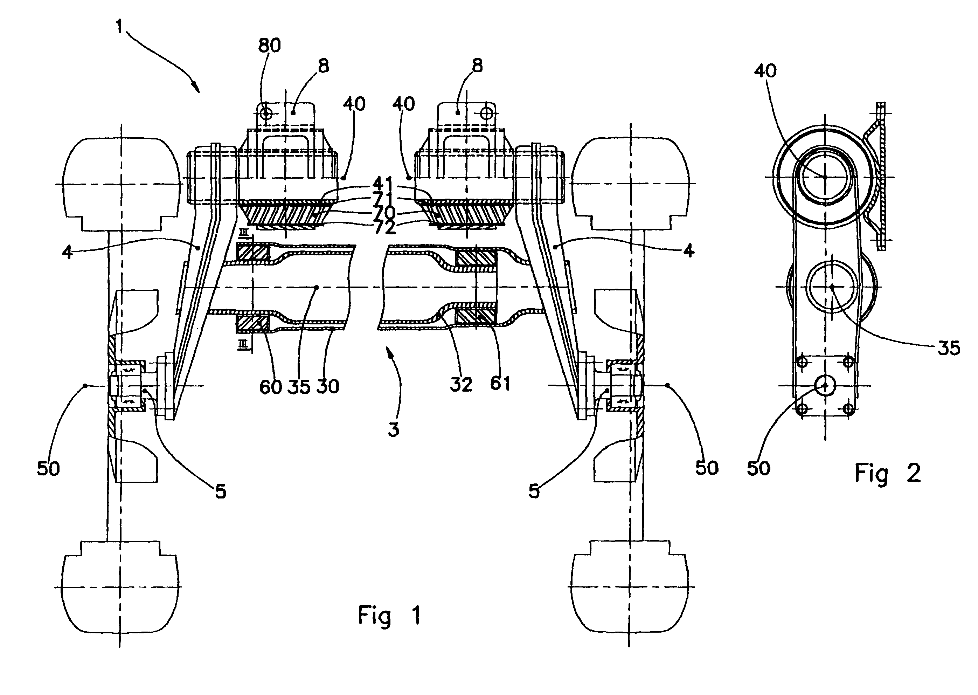

En consultant en parallèle les figures 1 et 2, on aperçoit un essieu 1, destiné à être monté sur la caisse 2 d'un véhicule par l'intermédiaire de supports 8 utilisant quatre points 80 de fixation à la caisse. L'essieu 1 comporte une traverse 3, reliant deux bras de suspension 4. Chaque bras de suspension 4 est relié à un arbre 41 qui définit un axe d'articulation 40 (c'est à dire un axe de débattement du bras 4 considéré par rapport à la caisse 2). Les bras de suspension 4 portent une fusée 5 du côté opposé à l'arbre 41 de bras. Chaque fusée 5 est destinée à recevoir une roue.

Des articulations élastiques 70 de suspension, constituées ici par des bagues en caoutchouc, entourent les deux arbres 41, sur lesquels elles sont montées sans rotation relative possible. Les mêmes articulations élastiques 70 sont montés par ailleurs sur les supports 8, également sans rotation relative possible. Les articulations élastiques 70 forment ainsi des ressorts de torsion, par lesquels peut se transmettre une partie du poids du véhicule.

On a représenté à la figure 1 une exécution tout particulièrement avantageuse des bagues en caoutchouc constituant les articulations élastiques 70. La forme en coupe radiale desdites articulations 70 a l'allure générale d'un trapèze. La largeur de la face radialement intérieure de chaque articulation élastique 70, en contact avec l'anneau intérieur 71, est plus grande que la largeur de la face radialement extérieure, en contact avec l'anneau extérieur 72. De préférence, sur au moins la plus grande partie de l'épaisseur de ladite articulation, la surface de chaque section cylindrique est sensiblement constante quel que soit le rayon de ladite section cylindrique. Autrement dit, le produit du rayon par la largeur est sensiblement constant quel que soit le rayon, au moins en dehors des zones de raccordement aux anneaux intérieurs et extérieurs.

L'essieu illustré aux différentes figures comporte une traverse 3 qui intègre une fonction antiroulis. A la figure 1, on voit que la traverse 3 est constituée essentiellement par deux demi-traverses emboîtées l'une dans l'autre. L'une de ces demi-traverses est constituée par un premier tube 30. L'autre de ces demi-traverses est constituée par un second tube 32 coaxial dont le diamètre extérieur est strictement inférieur au diamètre intérieur du premier tube 30. Les deux demi-traverses insérées l'une dans l'autre forment une partie emboîtée qui, grâce à deux pièces d'accouplement 60, 61 en matériau élastomérique, relie en flexion les deux demi-traverses. Chacun des tubes 30, 32 est encastré directement sur un bras 4, auquel il est par exemple soudé. Il n'y a donc aucun déplacement possible d'un tube 30 ou 32 par rapport au bras 4 correspondant.

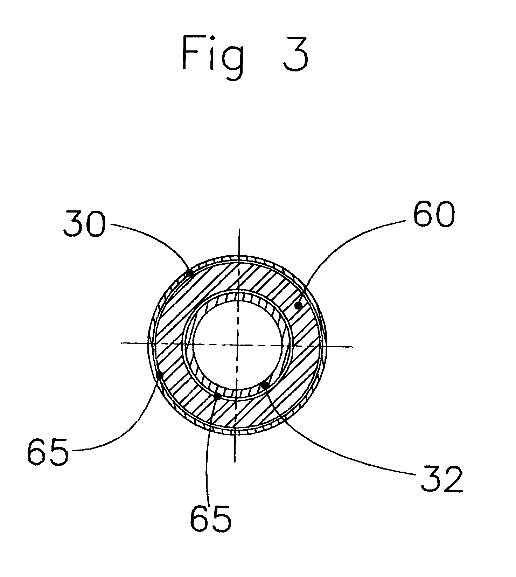

Les pièces d'accouplement 60 et 61 sont ici constituées par des bagues en caoutchouc (pièces de révolution) adhérisé sur des viroles métalliques 65 (figure 3), par exemple au moment de la vulcanisation des bagues en caoutchouc. Les viroles 65 sont frettées ou collées sur les tubes 30 et 32. Les deux demi-traverses sont ainsi reliées en torsion, avec décalage angulaire possible de l'une par rapport à l'autre, en fonction de la sollicitation et de la raideur de torsion cumulée présentée par les bagues 60 et 61. La totalité du couple de réaction équilibrant le déplacement relatif entre bras causé par la torsion de l'essieu passe par les pièces d'accouplement, et se répartit entre elles.

Grâce aux pièces d'accouplement 60, 61, un déplacement transversal relatif entre tubes 30 et 32 est possible. Les observations expérimentales montrent qu'il est très faible. Mais, si faible soit-il, il contribue à améliorer grandement l'endurance de la liaison des tubes 30 et 32 à leurs bras respectifs 4 par la diminution importante des contraintes orientées transversalement. Il en résulte une amélioration de la tenue de l'encastrement de la traverse 3 sur les bras 4 par rapport aux solutions en usage pour les traverses décalées par rapport à l'axe d'articulation 40 de l'essieu sur la caisse.

Le décalage longitudinal s'observe très bien à la figure 1. Il permet une correction de carrossage lors des sollicitations de l'essieu en torsion autour de l'axe de torsion 35. Le plan des roues s'incline vers l'intérieur du virage. Le décalage en hauteur par rapport au plan comprenant l'axe d'articulation 40 et l'axe de rotation des roues ou axe de fusée 50 s'observe très bien à la figure 2. Un décalage dans le sens indiqué à la figure permet une correction de braquage lors des sollicitations de l'essieu en torsion autour de l'axe de torsion 35. Le plan des roues braque vers l'intérieur du virage.

L'essieu procure toutes les fonctions offertes habituellement par les barres antiroulis et les ressorts de suspension. Il suffit éventuellement de lui ajouter des amortisseurs. non représentés car pouvant être d'un type et d'une implantation classiques. Les pertes hystérétiques du caoutchouc des articulations élastiques 70 peuvent cependant suffire à l'amortissement, ou du moins elles y contribuent largement. Grâce aux propriétés de filtration des vibrations apportées par l'utilisation de caoutchouc, il peut ne plus être nécessaire d'utiliser des blocs de caoutchouc de filtrage, les articulations élastiques 70 de suspension jouant aussi ce rôle. Grâce au fait que, lors du dimensionnement de l'essieu, il est aisé d'éloigner les paliers 60 et 61 l'un par rapport à l'autre, ce contrôle du braquage relatif, important pour un comportement du véhicule de grande qualité, se fait dans d'excellentes conditions. L'essieu peut être très aisément décliné en différentes variantes de voies différentes pour différentes versions d'un même véhicule : il suffit au montage de l'essieu d'enfoncer plus ou moins les tubes 30 et 32 l'un dans l'autre pour obtenir des écartements différents entre les bras 4. Un positionnement adapté des articulations élastiques 70 sur les axes 40 permet de toujours respecter la même cote d'écartement entre les supports 8, pour monter l'essieu sur une caisse donnée.

L'utilisation du caoutchouc permet de concevoir des ressorts non linéaires, d'intégrer aux mêmes éléments 70, et éventuellement aux paliers 60 et 61, des fonctions de butées de débattement. Tous les frottements (en dehors de ceux propres aux amortisseurs éventuellement présents) sont éliminés. Elle permet aussi d'adopter des tolérances de fabrication plus larges pour les pièces mécaniques comme les tubes 30 et 32, ou pour les arbres 41 et les supports 8. En outre, contrairement à l'emploi de roulements, l'utilisation de caoutchouc supprime les problèmes de graissage et d'étanchéité. Il est possible de tenir compte du fluage dû aux sollicitations statiques par un réglage judicieux lors de l'assemblage, car la quasi totalité du fluage intervient dans les premières heures de sollicitation.

Pour réaliser les tubes 30, 32, on peut utiliser un matériau composite, comportant une résine chargée de fibres renforçantes. Ce type de matière présente l'intérêt d'une plus grande légèreté.

L'invention trouve application en particulier comme train arrière d'un véhicule de tourisme de petites dimensions. Mais elle peut trouver des applications plus largement dans toute catégorie de véhicule car on peut régler sélectivement et séparément les caractéristiques de torsion recherchées et la précision de guidage des plans de roue.

## Revendications

1. Essieu (1) souple, pour véhicule comportant au moins deux essieux et une caisse suspendue, ledit essieu (1) comportant deux bras (4) tirés et une traverse (3) à laquelle lesdits bras sont reliés, lesdits bras (4) étant destinés à être accrochés à la caisse de façon à définir un axe d'articulation (40) de chaque bras par rapport à la caisse, lesdits bras (4) portant chacun une fusée (5) destinée à recevoir une roue, ladite traverse (3) reliant lesdits bras (4) de telle façon qu'ils définissent un axe de torsion relative (35) autour duquel les bras (4) oscillent l'un par rapport à l'autre, l'axe de torsion (35) étant décalé par rapport à l'axe d'articulation (40) de chaque bras par rapport à la caisse, **caractérisé en ce que** la traverse (3) et les bras (4) sont reliés les uns aux autres par des moyens de liaison comprenant deux pièces d'accouplement (60, 61) en matériau élastomérique reliant des éléments accouplés, solidaires sans glissement de ceux-ci et disposées de façon sensiblement symétrique transversalement, chaque pièce d'accouplement ayant une raideur transversale prédéterminée, chaque pièce d'accouplement ayant une raideur de torsion autour de l'axe de torsion (35) prédéterminée, lesdites pièces d'accouplement étant agencées de telle façon que :
• elles autorisent un déplacement transversal relatif entre éléments accouplés,
• la totalité du couple de réaction équilibrant le déplacement relatif entre bras causé par la torsion de l'essieu soit transmis par les pièces d'accouplement,
• les pièces d'accouplement sont axialement éloignées l'une de l'autre.

2. Essieu selon la revendication 1, dans lequel la traverse (3) est formée essentiellement de deux demi-traverses en partie emboîtées l'une dans l'autre, lesdites pièces d'accouplement (60, 61) reliant les demi-traverses et étant situées aux extrémités axialement opposées de ladite partie emboîtée, chacune des demi-traverses étant encastrée respectivement sur l'un des bras.

3. Essieu selon la revendication 2, dans lequel la partie emboîtée comporte un premier tube (30) contenant un second tube (32), le diamètre extérieur du second étant strictement inférieur au diamètre intérieur du premier en tout point transversalement, lesdites pièces d'accouplement étant des pièces de révolution.

4. Essieu selon l'une des revendications 1 à 3, dans lequel chaque bras comporte un arbre (41) situé sur l'axe (40) de rotation par rapport à la caisse, ledit essieu comportant en outre deux supports (8) recevant lesdits arbres (41), chaque support (8) comportant une surface de référence de montage sur ladite caisse, une articulation élastique de suspension (70) étant intercalée entre chaque support (8) et l'arbre (41) correspondant, ladite articulation élastique (70) étant solidaire sans glissement à la fois dudit support (8) et dudit arbre (41).

5. Essieu selon la revendication 4, dans lequel chaque arbre et chaque support comportent chacun une portée cylindrique, ladite articulation élastique (70) étant insérée entre lesdites portées, ladite articulation élastique étant une pièce de révolution sollicitée en torsion par rotation relative desdites portées lors du débattement de la suspension.

## Patentansprüche

1. Weiche Achse (1) für ein Fahrzeug mit mindestens zwei Achsen und einem aufgehängten Aufbau, wobei die genannte Achse (1) zwei Längslenker (4) und einen Querträger (3) aufweist, mit dem die genannten Lenker verbunden sind, die genannten Lenker (4) dazu bestimmt sind, am Aufbau derart angesetzt zu werden, daß sie eine Schwenkachse (40) für jeden Lenker bezüglich des Aufbaus bilden, die genannten Lenker (4) jeweils eine Spindel (5) tragen, die zur Aufnahme eines Rades bestimmt ist, der genannte Querträger (3) die genannten Lenker (4) derart verbindet, daß sie eine relative Torsionsachse (35) definieren, rund um welche die Lenker (4) zueinander oszillieren, und die Torsonsachse (35) bezüglich der Schwenkachse (40) eines jeden Lenkers, auf den Aufbau bezogen, versetzt ist, **dadurch gekennzeichnet, daß** der Querträger (3) und die Lenker (4) miteinander durch Verbindungsmittel verbunden sind, die zwei Koppelungsstücke (60, 61) aus Elastomermaterial aufweisen, die die zusammengekoppelten Elemente fest und ohne deren Gleitbewegung verbinden, und in Querrichtung im wesentlichen symmetrisch angeordnet sind, wobei jedes Koppelungsstück eine vorbestimmte Quersteifigkeit hat, jedes Koppelungsstück eine vorbestimmte Torsionssteifigkeit um die Torsionsachse (35) hat, und die genannten Koppelungsstücke derart ausgebildet sind, daß:
° sie eine relative Querversetzung zwischen den gekoppelten Elementen veranlassen,
° die Gesamtheit des Reaktionsmomentes, das die relative Versetzung zwischen den Lenkern ausgleicht, die durch die Torsion der Achse verursacht wird, durch die Koppelungsstücke übertragen wird, und
° die Koppelungsstücke axial voneinander entfernt sind.

2. Achse nach Anspruch 1, worin der Querträger (3) im wesentlichen aus zwei Halb-Querträgem gebildet ist, die teilweise ineinander eingeschachtelt sind, wobei die genannten Koppelungsstücke (60, 61) die Halb-Querträger verbinden und an den axial gegenüberliegenden Enden des eingeschachtelten Teils gelegen sind, und wobei jeder der Halb-Querträger jeweils in einen der Lenker eingelassen ist.

3. Achse nach Anspruch 2, worin der eingeschachtelte Teil ein erstes Rohr (30) aufweist, das ein zweites Rohr (32) enthält, wobei der Aussendurchmesser des zweiten Rohres unbedingt kleiner als der Innendurchmesser des ersten an jedem Punkt in Querrichtung ist, und die genannten Koppelungsstücke Rotationskörper sind.

4. Achse nach einem der Ansprüche 1 bis 3, worin jeder Lenker eine Welle (41) aufweist, die auf der geometrischen Achse (40) der Schwenkbewegung bezüglich des Aufbaus gelegen ist, die genannte Achse außerdem zwei Träger (8) aufweist, die die genannten Wellen (41) aufnehmen, jeder Träger (8) eine Bezugsfläche der Anbringung am genannten Aufbau aufweist, eine elastische Aufhängungsanlenkung (70) zwischen dem Träger (8) und der entsprechenden Welle (41) eingeschoben ist, und die genannte elastische Anlenkung (70) fest ohne Gleitmöglichkeit gleichzeitig mit dem genannten Träger (8) und der genannten Welle (41) verbunden ist.

5. Achse nach Anspruch 4, worin jede Welle und jeder Träger jeweils einen zylindrischen Bereich aufweist, die genannte, elastische Anlenkung (70) zwischen den genannten Bereichen eingefügt ist, und die genannte elastische Anlenkung ein Rotationkörper ist, der durch Drehung der genannten Bereiche während des Einfederns der Aufhängung auf Torsion belastet wird.

## Claims

1. A flexible axle (1), for a vehicle comprising at least two axles and a suspended body, said axle (1) comprising two trailing arms (4) and a crosspiece (3) to which said arms are connected, said arms (4) being intended to be hooked to the body so as to define an axis of articulation (40) of each arm relative to the body, said arms (4) each bearing a stub axle (5) intended to receive a wheel, said crosspiece (3) connecting said arms (4) such that they define a relative axis of torsion (35) about which the arms (4) oscillate relative to each other, the axis of torsion (35) being offset relative to the axis of articulation (40) of each arm relative to the body, **characterised in that** the crosspiece (3) and the arms (4) are connected together by connection means comprising two coupling parts (60, 61) of elastomeric material connecting the coupled elements, which are integral without sliding thereof and are arranged substantially transversely symmetrically, each coupling part having a predetermined transverse stiffness, each coupling part having a predetermined torsional stiffness about the axis of torsion (35), said coupling parts being arranged such that:
• they permit relative transverse displacement between coupled elements,
• the entire reaction torque balancing the relative displacement between arms caused by the torsion of the axle is transmitted by the coupling parts,
• the coupling parts are axially spaced apart from each other.

2. An axle according to Claim 1, in which the crosspiece (3) is formed essentially of two half-crosspieces partially fitted one into the other, said coupling parts (60, 61) connecting the half-crosspieces and being located at the axially opposing ends of said fitted part, each of the half-crosspieces being fixed respectively on one of the arms.

3. An axle according to Claim 2, in which the fitted part comprises a first tube (30) containing a second tube (32), the external diameter of the second tube being strictly less than the internal diameter of the first tube at any point transversely, said coupling parts being parts of revolution.

4. An axle according to one of Claims 1 to 3, in which each arm comprises a shaft (41) located on the axis of rotation (40) relative to the body, said axle furthermore comprising two supports (8) which receive said shafts (41), each support (8) comprising a reference surface for mounting on said body, a flexible suspension joint (70) being inserted between each support (8) and the corresponding shaft (41), said flexible joint (70) being integral without sliding both with said support (80) and said shaft (41).

5. An axle according to Claim 4, in which each shaft and each support each comprise a cylindrical bearing surface, said flexible joint (70) being inserted between said bearing surfaces, said flexible joint being a part of revolution which is torsionally stressed by relative rotation of said bearing surfaces upon displacement of the suspension.
